**Europäisches Patentamt**

**European Patent Office**

**Office européen des brevets**

(19)

(11) Veröffentlichungsnummer : **0 082 107**
**B1**

(12) **EUROPÄISCHE PATENTSCHRIFT**

(45) Veröffentlichungstag der Patentschrift :
15.04.87

(21) Anmeldenummer : **82730145.8**

(22) Anmeldetag : **10.12.82**

(51) Int. Cl.⁴ : **G 01 F 1/38**, G 01 F 1/88

(54) Luftmassenmessvorrichtung für eine Verbrennungskraftmaschine.

(30) Priorität : 11.12.81 DE 3149911

(43) Veröffentlichungstag der Anmeldung :
22.06.83 Patentblatt 83/25

(45) Bekanntmachung des Hinweises auf die Patenterteilung : 15.04.87 Patentblatt 87/16

(84) Benannte Vertragsstaaten :
**AT BE CH DE FR GB IT LI LU NL SE**

(56) Entgegenhaltungen :
**EP-A- 0 061 856**
**DE-A- 2 626 450**
**US-A- 2 890 411**
**US-A- 3 752 393**
**US-A- 4 149 254**

(73) Patentinhaber : **Deutsche Vergaser Gesellschaft GmbH & Co. KG**
**Scheringstrasse 13-28**
**D-1000 Berlin 65 (DE)**

(72) Erfinder : **Schmidt, Robert**
**Winterfeldstrasse 52**
**1000 Berlin 30 (DE)**
Erfinder : **Heerhorst, Wolfgang**
**Happestrasse 3**
**1000 Berlin 49 (DE)**

(74) Vertreter : **Lüke, Dierck-Wilm, Dipl.-Ing.**
**Gelfertstrasse 56**
**D-1000 Berlin 33 (DE)**

**Beschreibung**

Die Erfindung bezieht sich auf eine Luftmassenmeßvorrichtung für eine Verbrennungskraftmaschine mit einer Drosselkappe zur Ansaugluftregulierung im Ansaugstutzen.

Eine solche Luftmassenmeßvorrichtung ist aus der älteren EP-A-61 856 vorbekannt, welche auf eine britische Prioritätsanmeldung vom 1. April 1981 zurückgeht und welche am 6. Oktober 1982 veröffentlicht worden ist. Hierbei wird als Einrichtung zur Messung des Differenzdruckes ein handelsüblicher Umwandler verwendet, welcher mit Dehnungsmeßstreifen versehen ist. Eine solche Einrichtung zur Ermittlung des Differenzdruckes arbeitet ungenau und berücksichtigt insbesondere nicht den Außendruck, d. h. die Höhenlage, in welcher sich ein Kraftfahrzeug gegenüber der Höhe Normal-Null befindet.

Der Erfindung liegt von daher die Aufgabe zugrunde, eine Luftmassenmeßvorrichtung der gattungsgemäßen Art zu schaffen, welche den Augenblickswert der durch den Ansaugstutzen durchströmenden Ansaugluft verzögerungsfrei und unbeeinflußt von Querschnittsabmessungen des Ansaugstutzens mißt und die insbesondere den Differenzdruck in Abhängigkeit vom Außendruck ermittelt.

Die Lösung dieser Aufgabe ergibt sich aus den Merkmalen des Anspruches 1. In der Auswerteelektronik wird die pro Zeiteinheit durchströmende Ansaugluftmenge verzögerungsfrei ermittelt und gleichzeitig durch Berücksichtigung der gemessenen Temperatur und des Druckes der Ansaugluft vor der Drosselklappe korrigiert, so daß eine Luftmassenmessung unbeeinflußt von Höhen- und damit Außendruckunterschiede möglich ist. Erfindungsgemäß wird der Differenzdruck der Ansaugluft vor und hinter der Drosselklappe mittels eines modifizierten Rohrfedermanometers gemessen, dessen freies Rohrfederende mit den Induktivitäten zweier mit einer quarzstabilen HF-Spannung gespeisten Schwingkreise zusammenwirkt, wobei die Induktivitäten der beiden Federn in Abhängigkeit vom gemessenen Außendruck verändert werden.

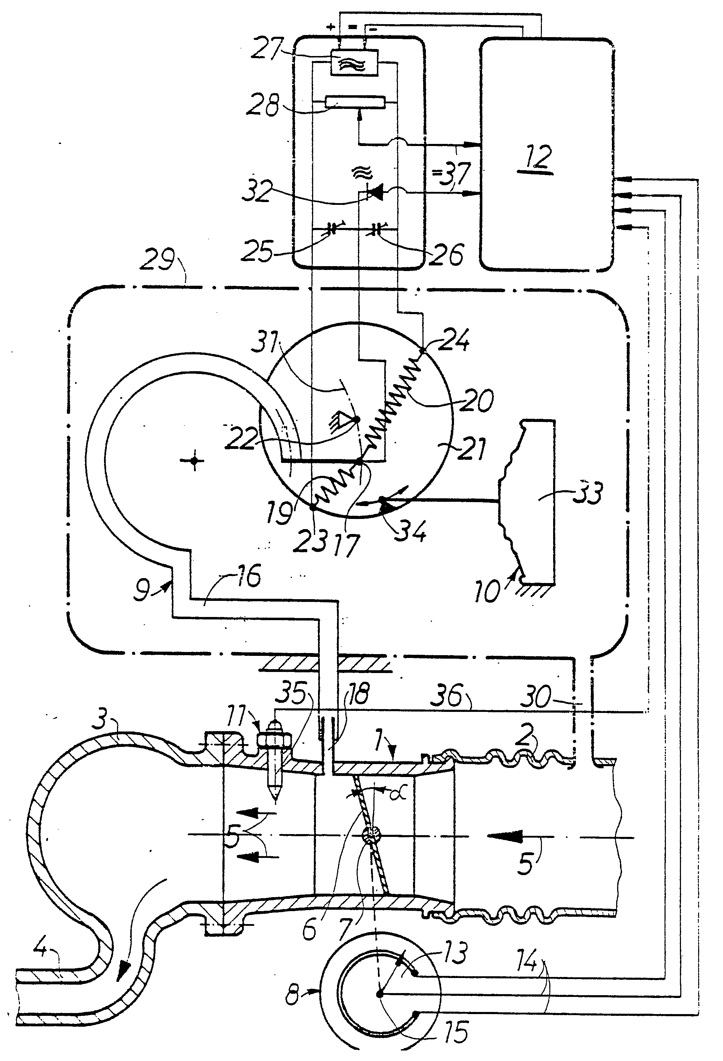

Die Erfindung ist nachfolgend anhand eines in der Zeichnung dargestellten bevorzugten Ausführungsbeispieles näher erläutert. Die einzige Figur zeigt einen Längsschnitt durch den mit einer Drosselklappe zur Ansaugluftregulierung versehenen Ansaugstutzen einer Verbrennungskraftmaschine mit daran angeschlossener erfindungsgemäßer Luftmassenmeßvorrichtung.

Die einzige Figur zeigt im unteren Teil einen Längsschnitt durch den Ansaugstutzen 1 einer Verbrennungskraftmaschine, insbesondere eines Kraftfahrzeugmotors. Dem Ansaugstutzen 1 ist ein nicht dargestellter Luftfilter vorgeschaltet, der über einen biegeelastischen Schlauch 2 an den Ansaugstutzen 1 angeschlossen ist Dieser geht in ein Ansaugsammelrohr 3 über, von welchem einzelne Ansaugleitungen 4 zu den einzelnen, nicht dargestellten Zylindern der Verbrennungskraftmaschine führen. Die Strömungsrichtung der Ansaugluft ist durch die Pfeile 5 gekennzeichnet.

Im Eingangsquerschnitt des Ansaugstutzens 1 befindet sich zur Ansaugluftregulierung eine Drosselklappe 6, die um ihre in den Wandungen des Ansaugstutzens 1 gelagerte Achse 7 schwenkbar ist. Die Drosselklappe 6 wird regelmässig vom Gaspedeal eines Kraftfahrzeuges betätigt. Sie dient zur Regulierung der Luftmenge bzw. Luftmasse, die der Verbrennungskraftmaschine zugeführt wird und die vor dem Einströmen in die einzelnen Zylinder der Verbrennungskraftmaschine mit Kraftstoff in einem bestimmten Mengenverhältnis gemischt wird. Zur Bestimmung des dem Motor zuzuführenden Verhältnisses von Luftmasse zu Kraftstoff ist die nachstehend beschriebene Luftmassenmessvorrichtung an den Ansaugstutzen 1 angeschlossen.

Die Luftmassenmessvorrichtung umfasst eine Einrichtung 8 zur Ermittlung des Stellwinkels der Drosselklappe 6, eine Einrichtung 9 zur Messung des Differenzdruckes der Ansaugluft vor und hinter der Drosselklappe 6, eine Einrichtung 10 zur Messung des Druckes der Ansaugluft vor der Drosselklappe 6 und eine Einrichtung 11 zur Messung der Temperatur der Ansaugluft, sowie ferner eine mit den Einrichtungen 8 bis 11 elektrisch verbundene Auswerte- und Steuerelektronik 12 zur Aufnahme und Auswertung der aus den einzelnen Einrichtungen 8 bis 11 zufliessenden Messdaten sowie zur Bestimmung und Steuerung der Rechteckimpulse für die nicht dargestellte Kraftstoffzumessvorrichtung.

Die Einrichtung 8 zur Ermittlung des Stellwinkels der Drosselklappe 6 ist aus einem Potentiometer 13 gebildet, das ein fein abgestuftes analoges elektrisches Signal erzeugt und das bereits auf kleinste Änderungen des Stellwinkels reagiert. Da der veränderliche Luftwiderstand im Ansaugstutzen 1 von der Stellung der Drosselklappe 6 abhängig ist, d. h. $k = f(\alpha)$, muss für einen bestimmten Ansaugstutzen 1 mit bestimmter Drosselklappe 6 eine Funktionskurve erstellt werden, welche den Durchlassfaktor k für alle Stellwinkel der Drosselklappe 6 angibt. In Abhängigkeit von der Stellung der Drosselklappe 6 wird somit ein analoges elektrisches Signal an die Auswerte- und Steuerelektronik 12 geleitet, wie es in der einzigen Figur durch die elektrischen Leitungen 14 dargestellt ist. In der Auswerte- und Steuerelektronik 12 sind die den einzelnen Stellwinkeln der Drosselklappe 6 bzw. deren elektrischen Signalen zugeordneten Durchlassfaktoren k abrufbar gespeichert.

Das Potentiometer 13 kann unmittelbar auf der Achse 7 der Drosselklappe 6 mit seiner Drehachse angebracht sein, wie es in der einzigen Figur durch die gestrichelte Verbindungslinie zwischen den Achsen 7 und 15 dargestellt ist. In nicht dargestellter Weise können die Achsen 7 und 15 jedoch auch durch ein geeignetes Hebelwerk miteinander verbunden sein.

Die Einrichtung 9 zur Messung des Differenzdruckes $\Delta p$ der Ansaugluft vor und hinter der Drosselklappe 6 ist aus einem in Strömungsrichtung hinter der Drosselklappe 6 mit einem Anschlussrohr 18 an den Ansaugstutzen 1 angeschlossenen Rohrfedermanometer 16 gebildet, dessen freies Rohrfederende 17 mit den Enden zweier stromdurchflossener Spiralfedern 19, 20 verbunden ist, deren andere Enden an einer um eine gehäusefeste Achse 22 drehbaren Ebene 21 in Abständen voneinander an den Punkten 23 und 24 angebracht sind. Die beiden stromduchflossenen Spiralfedern 19 und 20 bilden jeweils Teile von mit je einem Kondensator 25, 26 versehenen Schwingkreisen, die mit einer quarzstabilen Hochfrequenz-Spannung aus einer Spannungsquelle 27 gespeist werden und die resonanzähnlich schwingen. Ein Nullabgleich der beiden Schwingkreise im Zeitpunkt, in welchem das freie Ende 17 des Rohrfedermanometers 16 mit der Drehachse 22 der drehbaren Ebene 21 deckungsgleich ist, erfolgt mittels eines einstellbaren Widerstandes 28. Das von den beiden Schwingkreisen erhaltene, über die elektrischen Leitungen 37 an die Auswerte- und Steuerelektronik 12 abgegebene Ausgangssignal entspricht dem gemessenen Differenzdruck $\Delta p$ zwischen dem Druck der Ansaugluft im Ansaugstutzen 1 vor der Drosselklappe 6 und hinter der Drosselklappe 6.

Als Vergleichsdruck wird normalerweise der Umgebungsdruck des Rohrfedermanometers 16 genommen, der mit dem Druck der Ansaugluft im Ansaugstutzen 1 vor der Drosselklappe 6 übereinstimmt. Um die Messung noch weiter zu verfeinern, kann die Einrichtung 9 zur Messung des Differenzdruckes $\Delta p$ innerhalb eines druckdichten Gehäuses 29 angeordnet sein, dessen Innenraum über ein Anschlussrohr 30 mit dem Ansaugstutzen 1 bzw. dem diesem vorgeschalteten Schlauch 2 in Verbindung steht und somit das Druckniveau der Ansaugluft vor der Drosselklappe 6 besitzt.

Die Einrichtung 9 zur Messung des Differenzdruckes arbeitet wie folgt : Druckdifferenzen im Ansaugstutzen 1 deformieren die Rohrfeder des Rohrfedermanometers 16. Hierdurch bewegt sich das freie Ende 17 der Rohrfeder auf einer gekrümmten Bahn 31. Die Induktivität der am freien Ende 17 befestigten stromdurchflossenen Spiralfedern 19, 20 wird verändert. Durch die Hochfrequenzspeisung der beiden Schwingkreise entsteht ein druckabhängiges hochfrequentes Spannungssignal, das durch eine den Ausgangsleitungen 37 vorgeschaltete Diode 32 gleichgerichtet wird.

Zur Korrektur des mittels der Einrichtung 9 gemessenen Differenzdruckes $\Delta p$ in Abhängigkeit vom Aussendruck, d. h. in Abhängigkeit von der Höhenlage, in welcher sich ein Kraftfahrzeug gegenüber der Höhe Normal-Null befindet, ist die Einrichtung 10 vorgesehen, welche aus einer einen abgeschlossenen Luftinhalt normalen Luftdruck enthaltenden Druckmessdose 33 besteht. Druckänderungen der das System umgebenden Aussenluft, d. h. auch der durch den Ansaugstutzen 1 angesaugten Ansaugluft verändern die axiale Länge der Druckmessdose 33, deren beweglicher Teil an die drehbare Ebene 21 im Punkt 34 festangeschlossen ist. Somit werden Druckänderungen des äusseren Luftdruckes auf die drehbare, im Ausführungsbeispiel kreisrunde Ebene 21 übertragen, deren Drehachse 22 dann in Deckung mit dem freien Federende 17 des Rohrfedermanometers 16 liegt, wenn der Aussendruck gleich dem Druck im Ansaugsammelrohr 3 ist, d. h. die Druckverhältnisse der Ansaugluft vor und hinter der Drosselklappe 6 identisch sind. In diesem Falle wird ein Nullsignal erhalten, d. h. $\Delta p$ ist gleich 0. Eine Drehung des Punktes 34 unter Einfluss der Druckmessdose 33 bestimmt folglich mehr oder weniger progressiv die Änderung der Induktivitäten der Spiralfedern 19 und 20 bei Auslenkung des freien Federendes 17 entlang der Bahn 31.

Schliesslich wird durch einen Temperaturmessfühler 35, der hinter der Drosselklappe 6 in das Ansaugrohr 1 ragt und der als Einrichtung 11 zur Messung der Temperatur der Ansaugluft dient, noch über die elektrische Leitung 36 ein zusätzliches Korrektursignal in die Auswerte- und Steuerelektronik 12 gegeben, das den Temperaturzustand der Ansaugluft ermittelt.

Anstelle der induktiven Messung des Differenzdruckes $\Delta p$ der Ansaugluft vor und hinter der Drosselklappe 6 können auch kapazitive Messeinrichtungen oder Messeinrichtungen mit Dehnungsmeßstreifen treten.

Für die Bestimmung der Luftmasse M in der Auswerte- und Steuerelektronik 12 gilt die Formel :

$$ M = k \cdot \sqrt{(p_a - p_s)} \cdot \frac{p_a}{p_0} \cdot \sqrt{\frac{(273 + t_0)}{(273 + t_a)}} . $$

Hierin bezeichnen der Faktor k den Durchgangsfaktor für den Ansaugstutzen in Abhängigkeit vom Stellwinkel der Drosselklappe 6, die Differenz $p_a - p_s = \Delta p$ die Druckdifferenz zwischen dem Ansaugluftdruck vor der Drosselklappe 6 und hinter der Drosselklappe 6 und der Bruch $p_a/p_0$ das Verhältnis von Aussendruck zu Normaldruck. Schliesslich gibt der Wert unter der letzten Wurzel in der Gleichung das Verhältnis von Normaltemperatur zu tatsächlich gemessener Lufttemperatur wieder.

Die Produktbildung zur Ermittlung der Luftmasse M erfolgt in der Auswerte- und Steuerelektronik 12, deren elektronische Verknüpfungen nicht näher dargestellt sind. Der ermittelte Wert der Luftmasse M dient zur Steuerung der Kraftstoffzumessung, der in nicht näher dargestellter Weise in das Ansaugsammelrohr 3 oder in die einzelnen Ansaugleitungen 4 eingespritzt wird.

Zusätzlich zum durch Aussendruck und Aussentemperatur korrigierten Druckmessystem für den Differenzdruck $\Delta p$ kann in der Auswerte- und Steuerelektronik 12 der Lastzustand der Verbrennungskraftmaschine erkannt werden, der dem Quotienten aus dem Durchlassfaktor k des Ansaugstutzens 1 in Abhängigkeit vom Stellwinkel der Drosselklappe 6 und der Druckdifferenz $\Delta p = p_a - p_s$ entspricht. Andererseits kann der Lastzustand der Verbrennungskraftmaschine auch durch den Quotienten aus tatsächlicher Luftmasse M und der Drehzahl n der Verbrennungskraftmaschine ermittelt werden. Hierbei ist die Erfassung des Lastzustandes am einfachsten. Somit kann die Auswerte- und Steuerelektronik 12 auch zusätzlich zur Luftmasse den Lastzustand erkennen und die Zumessungswerte des Kraftstoffes nicht nur entsprechend der Luftmasse sondern auch angepasst an den Lastzustand bestimmen.

Die beschriebene Luftmassenmessvorrichtung ist ein äussert empfindliches Druckmessystem, mit dem kleine Druckdifferenzen auch dann erfasst werden können, wenn bei kleinen Drehzahlen die Drosselklappe 6 weit geöffnet ist. Es wird die Öffnungsstellung der Drosselklappe 6 bewertet, also der Durchlassfaktor k und mit dem Differenzdruck Δp multipiziert. Das Produkt bedeutet die Grösse des Luftvolumens. Die Luftmasse M wird durch die zusätzliche Bewertung des tatsächlichen Druckes und der tatsächlichen Temperatur, die das Luftvolumen hat, erhalten, jeweils im Verhältnis zum Normaldruck bzw. zur Normaltemperatur, auf welche die Vorrichtung eingestellt ist. Die Höhenkorrektur bewertet den Druckzustand der Aussenluft, die ansaugseitig zur Verfügung steht. Die Höhenkorrektur wird durch die Druckmessdose 33 bewirkt.

Zur Vollastanreicherung bzw. Schubabmagerung soll das Mischungsverhältnis von Luftmasse zu Kraftstoff lastabhängig wirken, es soll also mehr Kraftstoff bei zunehmender Last zugeführt werden. Hierzu kann sowohl der Durchlassfaktor k als auch die Anordnung der Induktionsfedern 19, 20 den Gegebenheiten der Verbrennungskraftmaschine entsprechend ausgelegt werden, damit ein lastabhängiges Mischungsverhältnis von Luftmasse zu Kraftstoffmasse erzielt wird.

Zur weiteren Erläuterung der vorbeschriebenen Luftmassenmessvorrichtung wird die theoretische Luftmengenmessung beschrieben. Diese basiert darauf, dass die Intensität eines Flußes irgendeines Mediums, im vorliegenden Falle Luft, vom Druck oder Spannung des Mediums abhängig und dann messbar ist, wenn sich an einen Widerstand Änderungen von Druck oder Spannung ergeben. Die Intensität ist eine Geschwindigkeit. Die Intensität eines gasförmigen Mediums durch einen bestimmten Querschnitt führt zunächst zur Gasmenge, speziell zur Luftmenge.

Der Ottomotor besitzt als Regelorgan für die Verarbeitung benötigter Gasmengen die Drosselklappe, die mit dem Fahrpedal verbunden ist. Die Drosselklappe ist also ein veränderliches Hindernis für den Luftstrom, eine Art veränderlicher Luftwiderstand. Reziprok zum Widerstand ergibt sich ein Leitwert, im vorliegenden Fall der Durchlassfaktor k.

Im Zusammenhang mit vorliegender Erfindung vorgenommene Messversuche an einem zylindrischen Klappenstutzen bekannten Kalibers mit kreisrunder Drosselscheibe und genau bestimmter Ruhestellung (Drosselklappe geschlossen $\alpha0 = 4°$, $5°$, $8°$; $14°$; je nach Ausführung) mit der Fließbank ergaben hinsichtlich der rechnerischen Betrachtung folgendes :

1) Der rechnerische Zusammenhang von Luftmenge, Druckdifferenz und Drosselfaktor bzw. Durchlaßfaktor war für alle Versuchsergebnisse erkennbar als :

$$Q = k \cdot \sqrt[3.2]{pa - ps} = k \cdot (pa - ps)^{\frac{1}{3.2}} = k \cdot (pa - ps)^{0.3125}$$

2) der Durchlassfaktor k ist wie folgt berechenbar :

$$k = r_0^2 \cdot \pi \cdot \left[ 1 - \frac{\cos (\alpha_0 + \alpha_1)}{\cos (\alpha_0)} \right] : 10{,}3288$$

Hierbei bedeuten $r_0$ den Stutzendurchmesser mit $\pi$ als Fläche des Querschnittes, $\alpha_0$ die Ruhestellung bei geschlossener Klappe, $\alpha_1$ den Öffnungswinkel und die Zahl 10,328 8 eine technische Zahl für die Luftmenge in kg/h als Divisor.

In allen Fällen können mit diesen beiden Funktionen, die voneinander unabhängig sind, die auf der Fließbank ermittelten Luftmengenwerte berechnet werden, wobei der Fehler kleiner als 3 % ist. Der Fehler ist auf nicht totale Abdichtung der Drosselscheibe bei Nullstellung zurückzuführen. Der Fehler ist technisch kompensierbar.

Als Schlussfolgerung vorstehender Ausführungen ergibt sich, dass an einem bekannten Klappenstutzen sich die durchfliessende Luftmenge berechnen lässt, wenn der Öffnungswinkel der Drosselscheibe und die Druckdifferenz bekannt sind.

Hieraus können folgende Nutzanwendungen folgen. Grundsätzlich gilt, dass ein Meßverfahren immer dann vorteilhaft ist, wenn keine zusätzlichen Einrichtungen erforderlich sind, um die Wirkungen des Mediums an diesen beobachten zu können, damit eine Messwertbildung ermöglicht wird. Es sollen Rückschlüsse an den vorhandenen, unvermeidlichen Effekten gewonnen werden und, diese sollen richtig gedeutet werden, dann werden keine künstlichen Hindernisse wie Stauklappen und Hitzdrähte, also zusätzliche sekundäre Einrichtungen mit ihren speziellen Besonderheiten benötigt. Mit einfachen Worten gesagt gilt, dass die Luft nicht merken soll, dass ihre Geschwindigkeit gemessen wird, d. h. der Fluß der Luft soll nicht behindert werden. Ferner sind die Vorteile einer elektronischen, intermittierenden Einspritzung offenkundig.

Um die voranstehend rechnerisch analysierten Zusammenhänge in ihrer Grösse durch ein entsprechend grosses elektrisches Signal ausweisen zu können, werden zwei Angaben benötigt : Einerseits muss der Differenzdruck ($p_a - p_s$) elektrisch dargestellt werden, wozu es vier Möglichkeiten gibt : Mittels Dehnstreifen, induktiv und kapazitiv mit HF-Spannung sowie den Hall-Effekt. Andererseits muss der Strömungswiderstand der jeweiligen Drosselklappenstellung ganz passiv als analoger elektrischer Widerstand mit einem Potentiometer ermittelt werden.

Bei richtiger Funktionsauslegung wird ein elektrisches Signal erhalten, dessen Grösse proportional der Luftmenge ist, d. h. das Signal aus der Druckdifferenzmessung wird durch das Potentiometer an der Drosselklappe verringert, wenn die Klappe geschlossen wird, und vergrössert bis hin zum Faktor 1 (eins), wenn die Klappe voll geöffnet ist.

Um das richtige Massenverhältnis von Luft und Kraftstoff anwenden zu können, müssen die Zustandsformen der zur Verfügung stehenden Luftmengen berücksichtigt werden. Druck und Temperatur der Luft müssen erkannt werden und in geeigneter Weise zur Massenbestimmung zu führen.

## Patentansprüche

1. Luftmassenmeßvorrichtung für eine Verbrennungskraftmaschine mit einer Drosselklappe zur Ansaugluftregulierung im Ansaugstutzen, mit Einrichtungen zur Ermittlung des Stellwinkels ($\alpha$) der Drosselklappe und zur Messung des Differenzdruckes ($\Delta p$) der Ansaugluft vor und hinter der Drosselklappe, sowie zur Messung der Temperatur und des Druckes der Ansaugluft vor der Drosselklappe und mit einer mit den Einrichtungen verbundenen Auswerte- und Steuerelektronik zur Auswertung der Meßdaten der Einrichtungen, worin die Einrichtung (9) zur Messung des Differenzdruckes ($\Delta p$) der Ansaugluft vor und hinter der Drosselklappe (6) aus einem in Strömungsrichtung hinter der Drosselklappe (6) angeordneten Rohrfedermanometer (16) gebildet ist, dessen freies Rohrfederende (17) mit den Enden zweier stromdurchflossener Spiralfedern (19, 20) verbunden ist, deren andere Enden in den Punkten (23, 24) an einer drehbaren Ebene (21) in Abständen voneinander angebracht sind, deren Drehlage in Abhängigkeit von der Druckmeßeinrichtung (10) der Ansaugluft vor der Drosselklappe (6) einstellbar ist, wobei die beiden Spiralfedern jeweils Teile von mit je einem Kondensator (25, 26) versehenen Schwingkreisen bilden, die mit einer quarzstabilen Hochfrequenzspannung gespeist sind und resonanzähnlich schwingen.

2. Vorrichtung nach Anspruch 1, worin mindestens das Rohrfedermanometer (16) in einem druckdichten Gehäuse (29) angeordnet ist, dessen Innenraum über einen Anschluß (30) mit dem Ansaugstutzen (1, 2) vor der Drosselklappe (6) verbunden ist.

## Claims

1. Air mass flow meter for internal-combustion engine, comprising a throttle flap for intake-air control in the intake stack, devices for determination of the bevel angle ($\alpha$) of the throttle flap and for measurement of the differential pressure ($\Delta p$) of the intake air upstream and downstream the throttle flap as well as for measurement of the temperature and the pressure upstream the throttle flap and an electronic evaluation and control circuitry connected to said devices and intended for the evaluation of the measured data of said devices, characterized by that the device (9) for measurement of the differential pressure ($\Delta p$) of the intake air upstream and downstream the throttle flap (6) is formed by a tube spring manometer (16) arranged downstream the throttle flap (6), the free tube spring end (17) of manometer (16) being connected to the ends of two current-carrying coil springs (19, 20), the other ends of which being arranged at positions (23, 24) in a rotatable plane (21) in such distances from each other that their rotary position is adjustable depending on the pressure-measuring device (10) of the intake air upstream the throttle flap (6), the two coil springs each forming part of oscillatory circuits each provided with a capacitor (25, 26), said oscillatory circuits being fed by a quartz-stabilised high-frequency voltage and vibrating in manner similar to resonance.

2. Device according to claim 1, characterized by that at least the tube spring manometer (16) is arranged in a pressure-tight enclosure (29), the interior of which being connected over a port (30) to the intake stack (1, 2) upstream the throttle flap (6).

## Revendications

1. Appareil pour la mesure de débit massique d'air pour un moteur à combustion interne, comprenant un papillon des gaz pour la régulation de l'air d'aspiration dans l'orifice d'aspiration, de dispositifs pour la détermination de l'équerre pliante ($\alpha$) du papillon des gaz et pour la mesure de la pression différentielle ($\Delta p$) de l'air d'aspiration en amont et en aval du papillon des gaz ainsi que pour la mesure de la température et de la pression de l'air d'aspiration en amont du papillon des gaz et comprenant un circuit électronique d'évaluation et de commande connecté aux dispositifs et étant

**0 082 107**

pourvu pour l'évaluation des données de mesure des dispositifs, caractérisé en ce que le dispositif (9) pour la mesure de la pression différentielle (Δp) de l'air d'aspiration en amont et en aval du papillon des gaz (6) est formé d'un manomètre avec tube-ressort (16) disposé en aval du papillon des gaz (6), dont l'extrémité libre du tube-ressort (17) est connectée aux extrémités de deux ressorts spiraux (19, 20) parcourus par le courant, les autres extrémités dans lesquelles étant disposées dans les points (23, 24) dans un plan (21) mobile autour d'un axe à des distances de l'une à l'autre, la position de rotation de laquelle étant ajustable en fonction du dispositif de mesure de la pression (10) de l'air d'aspiration en amont du papillon des gaz (6), les deux ressorts spiraux formant chacun parties d'un circuit oscillant avec un capaciteur (25, 26) chacun, les circuits oscillants étant alimentés d'une tension H. F. stabilisée par cristal et oscillant en analogie à une résonance.

2. Dispositif selon la revendication 1, caractérisé en ce qu'au moins le manomètre avec tube-ressort (13) est disposé dans un boîtier étanche (29), l'intérieur duquel étant connecté sur un raccordement (30) à l'orifice d'aspiration (1, 2), du papillon des gaz (6).

6